# EUROPÄISCHE PATENTANMELDUNG

(11) **EP 3 269 481 A1**
(43) Veröffentlichungstag der Anmeldung: **17.01.2018**
(21) Anmeldenummer: 16178773.4
(22) Anmeldetag: 11.07.2016
(51) Int. Cl.: B23D 51/10

(54) **FÜHRUNGSVORRICHTUNG FÜR EIN SÄGEBLATT**

(71) Anmelder: HILTI Aktiengesellschaft, 9494 Schaan (LI)
(72) Erfinder: Haas, Günter, 86916 Kaufering (DE); Meier, Stefan, 88131 Lindau (DE)
(74) Vertreter: Hilti Aktiengesellschaft Corporate Intellectual Property

(57) **Zusammenfassung**

Führungsvorrichtung (7), insbesondere für eine Säbelsäge, zum Aufnehmen und lösbaren Halten eines Werkzeugs (3), vorzugsweise eines Sägeblatts, enthaltend eine Halteeinrichtung (17) mit wenigstens einer ersten und zweiten Haltebacke (18, 19) für ein Aufnahmeende (9) des Werkzeugs (3), wobei sowohl die erste als auch die zweite Haltebacke jeweils eine Frontkante (26), eine erste Seitenkante (27) sowie eine zweite Seitenkante (28) enthält.

Die Frontkante der jeweils ersten und zweiten Haltebacke ist in einem im Wesentlichen rechten Winkel direkt mit der ersten und zweiten Seitenkante der jeweils ersten und zweiten Haltebacke verbunden.

## Beschreibung

Die vorliegende Erfindung betrifft eine Führungsvorrichtung, insbesondere für eine Säbelsäge, zum Aufnehmen und lösbaren Halten eines Werkzeugs, vorzugsweise eines Sägeblatts, enthaltend eine Halteeinrichtung mit wenigstens einer ersten und zweiten Haltebacke für ein Aufnahmeende des Werkzeugs, wobei sowohl die erste als auch die zweite Haltebacke jeweils eine Frontkante, eine erste Seitenkante sowie eine zweite Seitenkante enthält. Anstelle der Säbelsäge kann die Führungsvorrichtung auch jede andere geeignete Säge, wie beispielsweise eine Hub- bzw. Hubpendelsäge, vorgesehen sein.

Gattungsgemäße Sägen, wie z.B. Säbelsägen, weisen oftmals eine Führungsvorrichtung auf, um ein Aufnahmeende eines Sägeblatts aufzunehmen und zu halten. Hierbei ist es üblich, dass die Führungsvorrichtung zwei gegenüberliegende starr zueinander angeordnete Haltebacken aufweist. Zwischen die Haltebacken wird das Aufnahmeende des Sägeblatts positioniert und mittels eines Sicherungsstifts, der durch eine Durchbohrung in eine der Haltebacken geschraubt wird, befestigt. Durch eine Überwurfhülse, die um die Haltebacken positioniert ist, wird das Sägeblatt zusätzlich stabilisiert.

Für gewöhnlich weist das Aufnahmeende eines Sägeblatts eine geringere Breite auf als das eigentliche Sägebereich des Sägeblatts. Zwischen dem Aufnahmeende des Sägeblatts und dem Sägebereich liegt damit ein taillierter Bereich. Durch den relativ schmalen Übergang, d.h. den taillierter Bereich, zwischen dem Aufnahmeende des Sägeblatts und dem Sägebereich ist es möglich, dass das Sägeblatt in diesem Bereich abbricht. Oftmals brechen die Sägeblätter jedoch so ungünstig ab, dass der in der Führungsvorrichtung verbleibende Rest des Sägeblatts nur sehr umständlich, d.h. mit viel Mühe sowie dem Einsatz eines zusätzlichen Werkzeugs aus der Führungsvorrichtung entfernt werden kann.

Aufgabe der vorliegenden Erfindung ist es daher, das vorstehend beschriebene Problem zu lösen und insbesondere eine verbesserte Führungsvorrichtung zum Aufnehmen und lösbaren Halten eines Sägeblatts bereitzustellen, mit der die Entnahme eines Restes eines abgebrochenen Sägeblatts aus der Führungsvorrichtung einfacher möglich ist.

Die Aufgabe wird gelöst durch den Gegenstand des unabhängigen Anspruch 1.

Die Aufgabe wird gelöst durch das Bereitstellen einer Führungsvorrichtung, insbesondere für eine Säbelsäge, zum Aufnehmen und lösbaren Halten eines Werkzeugs, vorzugsweise eines Sägeblatts, enthaltend eine Halteeinrichtung mit wenigstens einer ersten und zweiten Haltebacke für ein Aufnahmeende des Werkzeugs, wobei sowohl die erste als auch die zweite Haltebacke jeweils eine Frontkante, eine erste Seitenkante sowie eine zweite Seitenkante enthält.

Erfindungsgemäß ist vorgesehen, dass die Frontkante der jeweils ersten und zweiten Haltebacke in einem im Wesentlichen rechten Winkel direkt mit der ersten und zweiten Seitenkante der jeweils ersten und zweiten Haltebacke verbunden ist.

Hierdurch bildet sich im Falle des Abbrechens des Werkzeugs, beispielsweise eines Sägeblatts, eine Bruchkante entlang des beispielsweise als Sägeblatt ausgestalteten Werkzeugs, die stets parallel zur Frontfläche der ersten und zweiten Haltebacken verläuft. Hierdurch verbleibt ein ausreichend großer bzw. relativ großer Anteil des beispielsweise als Sägeblatt ausgestalteten Werkzeugs, insbesondere des Aufnahmeendes des beispielsweise als Sägeblatt ausgestalteten Werkzeugs in der Führungsvorrichtung. Durch diesen relativ großen Anteil des verbleibenden Werkzeugs kann ein Anwender der beispielsweisen Säbelsäge den in der Führungsvorrichtung verbleibenden Rest einfach und schnell aus der Führungsvorrichtung entnehmen ohne ein spezielles Werkzeug, wie z.B. eine Zange, zur Hilfe zu nehmen.

Gemäß einer vorteilhaften Ausführungsform der vorliegenden Erfindung kann es möglich sein, dass sich in einem zusammengebauten Zustand der Führungsvorrichtung die Frontkante der jeweils ersten und zweiten Haltebacke um eine Wegstrecke (F) aus der Überwurfhülse in Pfeilrichtung (N) erstrecken. Hierdurch wird eine Bruchkante im Falle des Brechens des Sägeblatts weg von der Führungsvorrichtung und weiter in Richtung des Sägeblatts verlagert. Folglich vergrößert sich der Anteil des Sägeblatts, welches nach einem Bruch des Sägeblatts in der Führungsvorrichtung verbleibt. Je größer der Anteil des Sägeblatts ist, der nach dem Sägeblattbruch in der Führungsvorrichtung verbleibt, desto leichter kann dieser Anteil ohne Zuhilfenahme eines speziellen Werkzeugs aus der Führungsvorrichtung entnommen werden.

Entsprechend einer weiteren vorteilhaften Ausführungsform der vorliegenden Erfindung kann es möglich sein, dass die Wegstrecke einen Betrag von wenigstens 2 bis 5 mm aufweist. Mit einem Betrag von wenigstens 2 bis 7 mm wird die Bruchkante des Sägeblatts so weit weg von der Führungsvorrichtung und in Richtung des Sägeblatts verlagert, dass ein ausreichend großer Anteil des Sägeblatts für ein problemloses manuelles Entfernen aus der Führungsvorrichtung gegeben ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine Säbelsäge mit erfindungsgemäßer Führungsvorrichtung;
- Fig. 2: eine Sägeblatt mit einem Sägebereich und einem Aufnahmeende;
- Fig. 2a: eine Detailansicht des Aufnahmeendes des Sägeblatts;
- Fig. 3: die Säbelsäge mit dem an der Führungsvorrichtung positionierten Sägeblatt;
- Fig. 4: eine perspektivische Ansicht auf die erfindungsgemäße Führungsvorrichtung mit einer Überwurfhülse und einer ersten und zweiten Haltebacke der Halteeinrichtung;

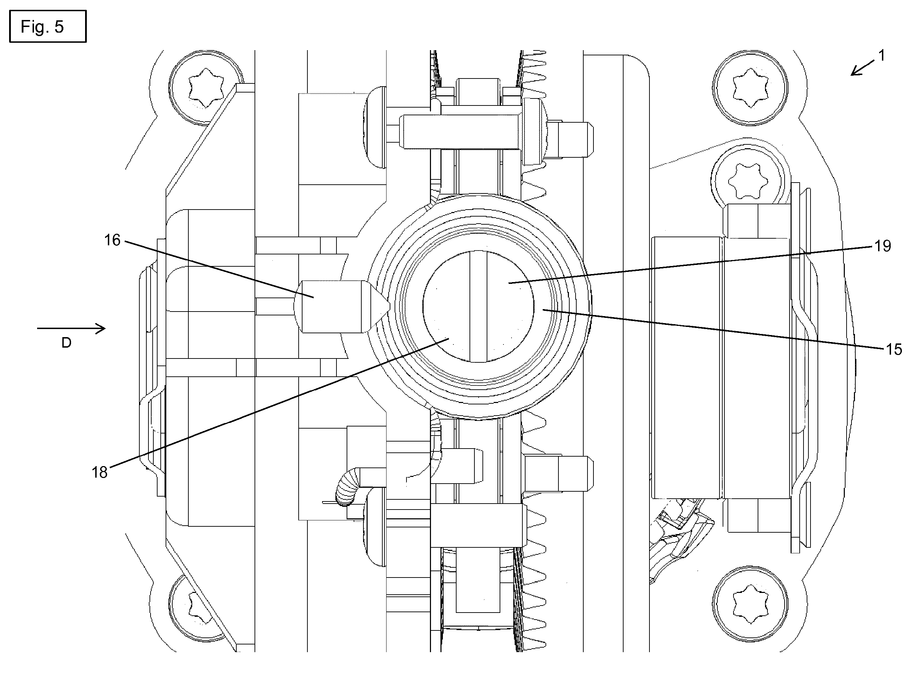

- Fig. 5: eine Frontansicht auf eine Säbelsäge mit der erfindungsgemäßen Führungsvorrichtung;

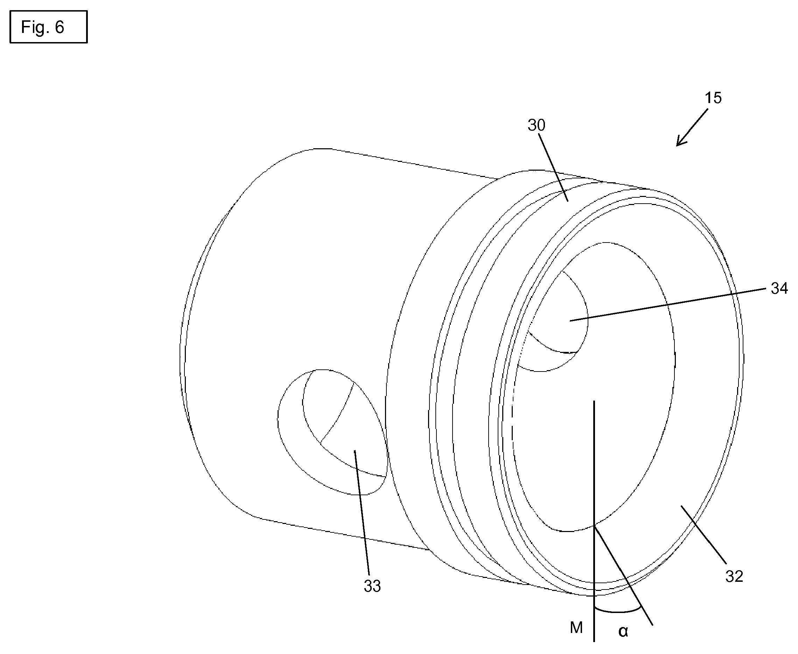

- Fig. 6: eine perspektivische Ansicht der Überwurfhülse;
- Fig. 7: eine perspektivische Ansicht der Halteeinrichtung mit der ersten und zweiten Haltebacken;
- Fig. 8: eine weiter perspektivische Ansicht der Halteeinrichtung mit der ersten und zweiten Haltebacken;
- Fig. 9: eine weiter perspektivische Ansicht der Halteeinrichtung mit der ersten und zweiten Haltebacken;
- Fig. 10: eine weiter perspektivische Ansicht der Halteeinrichtung mit der ersten und zweiten Haltebacken zusammen mit einem Sicherungsstift;
- Fig. 11: eine Seitenansicht auf die erfindungsgemäße Führungsvorrichtung mit einem in der Führungsvorrichtung aufgenommenen Werkzeug in Form eines Sägeblatts;
- Fig. 12: eine Schnittansicht entlang der Führungsvorrichtung mit dem in der Führungsvorrichtung aufgenommenen Werkzeug in Form des Sägeblatts;
- Fig. 13: eine perspektivische Ansicht der Führungsvorrichtung mit einem von den Klemmbacken gehaltenen Rest des abgebrochenen Sägeblatts; und
- Fig. 14: eine alternative Ausführungsform des ersten und zweiten Haltebacken.

### Ausführungsbeispiele:

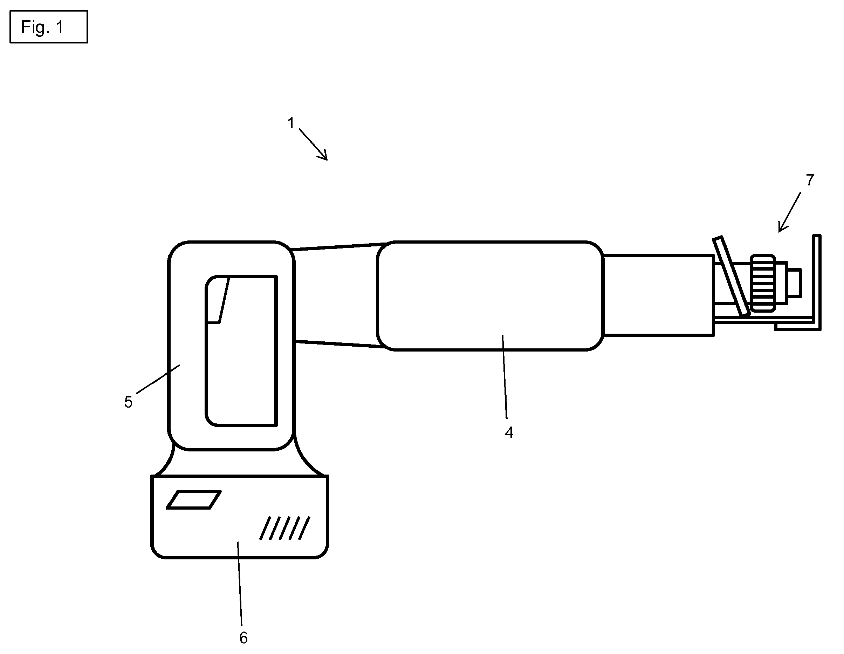

Fig. 1 zeigt eine motorbetriebene Werkzeugmaschine 1 in Form einer Säbelsäge mit einer erfindungsgemäßen Führungsvorrichtung 7 zum Aufnehmen und lösbaren Halten eines Werkzeugs 3, vorzugsweise eines Sägeblatts. Es ist jedoch auch möglich, dass eine andere Art von Säge, wie z.B. eine Stichsäge, verwendet werden kann.

Die Säbelsäge 1 enthält im Wesentlichen ein Gehäuse 4, ein Griffstück 5, einen Akkumulator (Akku) 6 zur Stromversorgung und die Führungsvorrichtung 7 zum Aufnehmen und lösbaren Halten eines Werkzeugs 3. In der vorliegenden Ausführungsform ist das Werkzeug als Sägeblatt ausgestaltet. Das Griffstück 5 ist an dem Gehäuse 4 positioniert und der Akku 6 ist wiederum an dem Griffstück 5 lösbar befestigt. Die Führungsvorrichtung 7 ist an dem vorderen Ende 4a des Gehäuses 4 positioniert. Alternativ zu dem Akku 6 kann die Säbelsäge 1 auch durch ein Netzkabel mit Strom versorgt werden. Das Netzkabel ist in den Figuren nicht dargestellt.

Mit Hilfe der Führungsvorrichtung 7 kann das Werkzeug 3 in Form des Sägeblattes mit der Säbelsäge 1 wiederlösbar verbunden werden. Die lösbare Verbindung dient beispielsweise dazu ein abgenutztes oder beschädigtes Sägeblatt gegen ein neues, unbenutztes Sägeblatt zu tauschen.

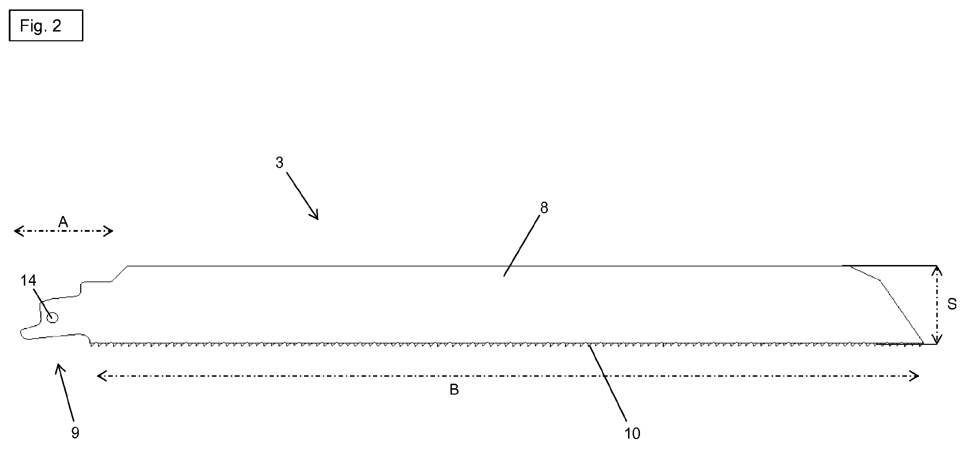

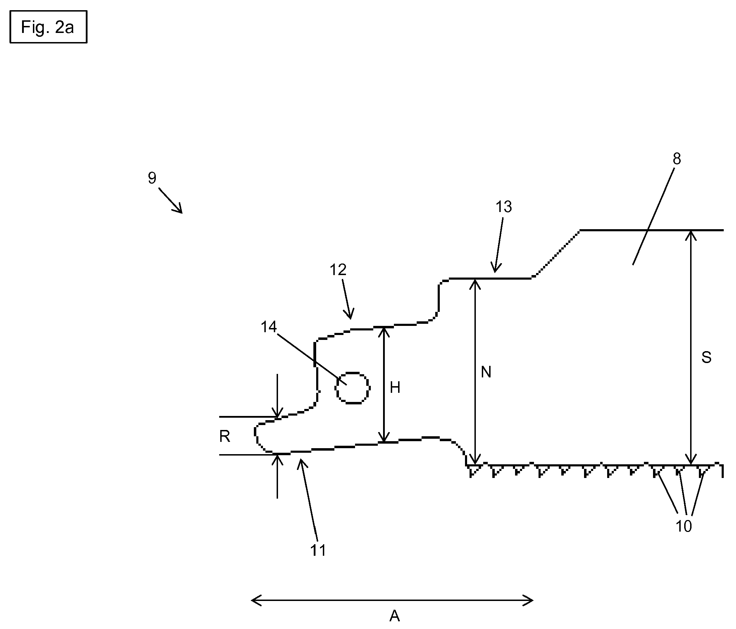

Das Sägeblatt 3 ist in Fig. 2 dargestellt und enthält im Wesentlichen einen Sägebereich 8 und ein Aufnahmeende 9. Der Sägebereich 8 weist an einer Unterseite eine Vielzahl von Sägezähnen 10 auf und dient zum Zersägen eines Werkstücks, beispielsweise Holz. Der Sägebereich 8 hat die Länge B und die Breite S. Für gewöhnlich ist die Breite S des Sägeblatts 3 geringer als dessen Länge B.

Das Werkstück ist in den Figuren nicht dargestellt.

Das Aufnahmeende 9 ist dazu ausgestaltet bzw. dient zur Aufnahme und zum wiederlösbaren Halten des Sägeblatts 3 in der Führungsvorrichtung 7 der Säbelsäge 1.

In Fig. 2a ist eine detaillierte Ansicht des Aufnahmeendes 9 des Sägeblatts 3 dargestellt. Das Aufnahmeende 9 des Sägeblatts 3 enthält im Wesentlichen einen ersten Bereich 11, einen zweiten Bereich 12 und ein dritten Bereich 13. Gemäß einer alternativen (nicht gezeigten) Ausführungsform kann das Aufnahmeende 9 des Sägeblatts 3 auch lediglich einen ersten und zweiten Bereich 11, 12 enthalten.

Der erste Bereich 11 weist eine Breite N auf, der zweite Bereich 12 weist die Breite H und der dritte Bereich 13 weist die Breite R auf. Wie in Fig. 2a dargestellt, ist die Breite N größer als die Breite H. Die Breite H ist größer als die Breite R. Der zweite Bereich 12 enthält des Weiteren eine Durchbohrung 14. Wie nachfolgend im Detail beschrieben, dient der erste und zweite Bereich 11, 12 des Aufnahmeendes 9 des Sägeblatts 3 zum Einführen in die Führungsvorrichtung 7.

Die Breite S des Sägebereichs 3 ist dabei größer als die Breite N des dritten Bereichs 13 des Aufnahmeendes 9.

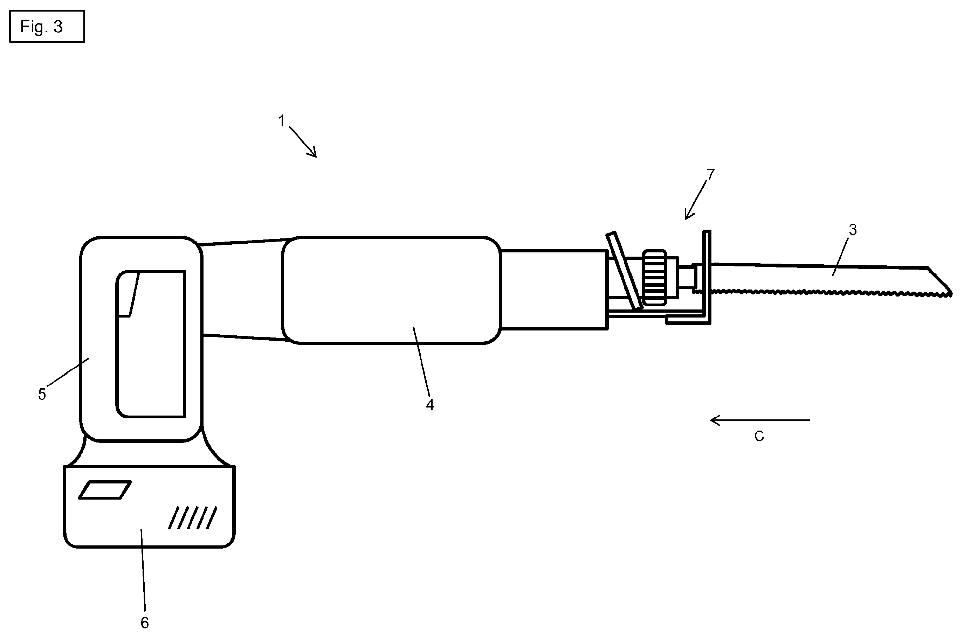

Fig. 3 zeigt die Säbelsäge 1 zusammen mit einem in der Führungsvorrichtung 7 aufgenommenen Sägeblatt 3. Das Aufnahmeende 9 des Sägeblatts 3 mit dem ersten und zweiten Bereich 11, 12 ist dabei nahezu vollständig in Pfeilrichtung C in die Führungsvorrichtung 7 eingeführt. Mit anderen Worten: das Sägeblatt 3 wird in der Führungsvorrichtung 7 von dem ersten und zweiten Bereich 11, 12 des Aufnahmeendes 9 gehalten.

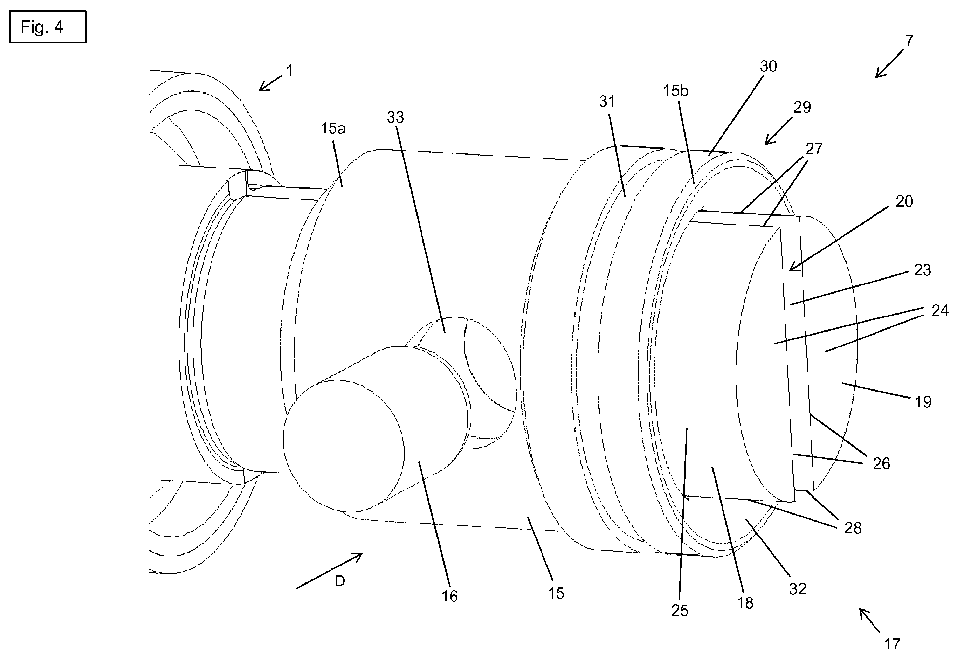

Wie Fig. 4 zu entnehmen ist, enthält die Führungsvorrichtung 7 im Wesentlichen eine Überwurfhülse 15, einen Sicherungsstift 16 sowie eine Halteeinrichtung 17.

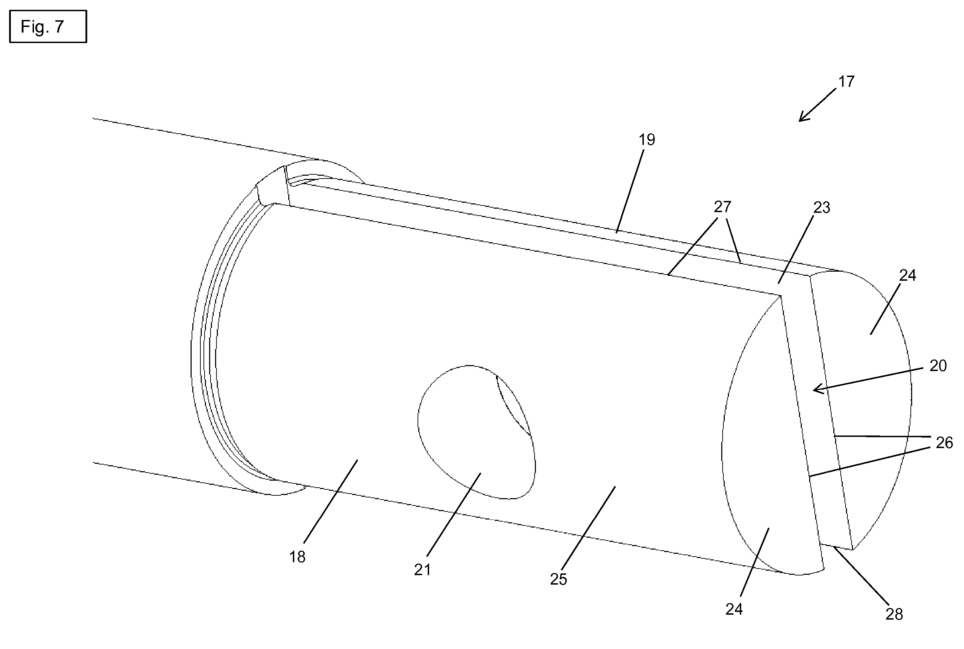

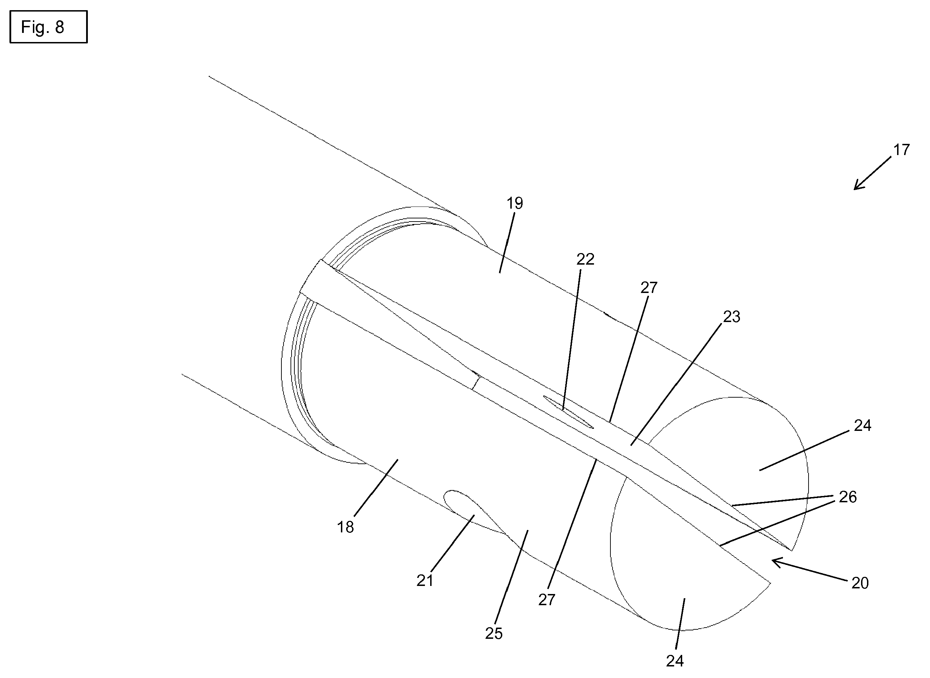

Die Halteeinrichtung 17 enthält eine erste Haltebacke 18 und eine zweite Haltebacke 19, wobei die erste und zweite Haltebacke 18, 19 durch eine Nut 20 getrennt sind (vgl. Fig. 7). In die Nut 20 und zwischen die erste und zweite Haltebacke 18, 19 wird der erste und zweite Bereich 11, 12 des Aufnahmeendes 9 des Sägeblatts 3 aufgenommen. Sowohl die erste als auch die zweite Haltebacke 18, 19 weist jeweils eine halbkreisförmige Querschnittsfläche auf. Die Querschnittsfläche der ersten und zweiten Haltebacke 18, 19 kann jedoch auch jede andere mögliche Form aufweisen. Wichtig ist jedoch, dass die Haltebacke 18, 19 wenigstens eine flache Seite bzw. flache Ebene enthält, die an ein Aufnahmeende 9 eines Werkzeugs 3, insbesondere an ein Aufnahmeende eines Sägeblatts, angelegt werden kann. Darüber hinaus weist die erste Haltebacke 18 eine erste Durchbohrung 21 und die zweite Haltebacke 19 eine zweite Durchbohrung 22 auf (vgl. Fig. 7 bis 10). Die erste Durchbohrung 21 ist dabei größer als die zweite Durchbohrung 22. Durch die erste Durchbohrung 21 wird der Sicherungsstift 16 in die erste Haltebacke 18 eingeführt. Die Durchbohrungen 21, 22 dienen dabei zur Aufnahme des Sicherungsstifts 16.

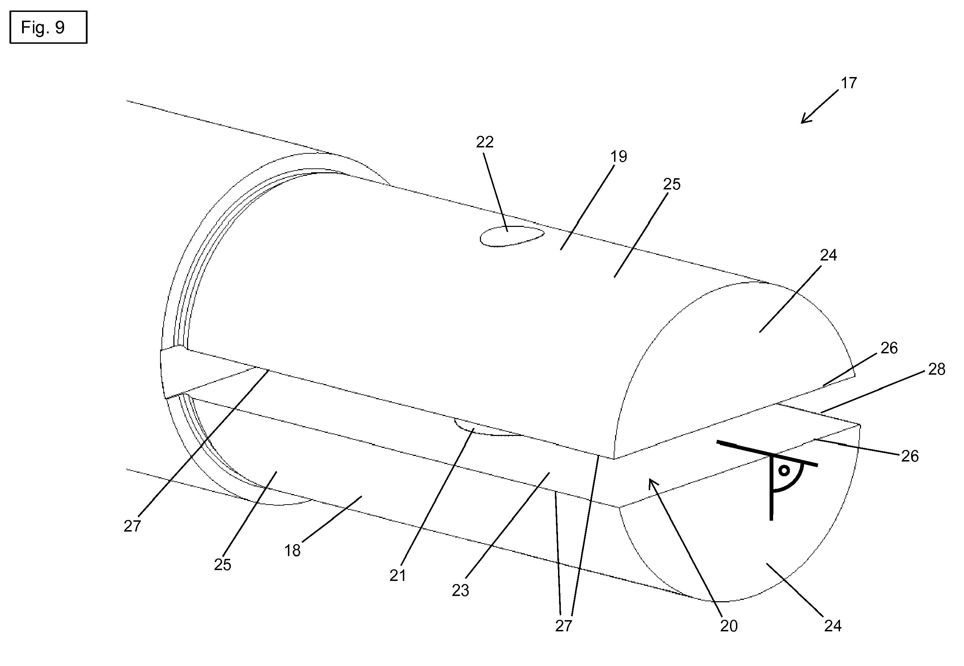

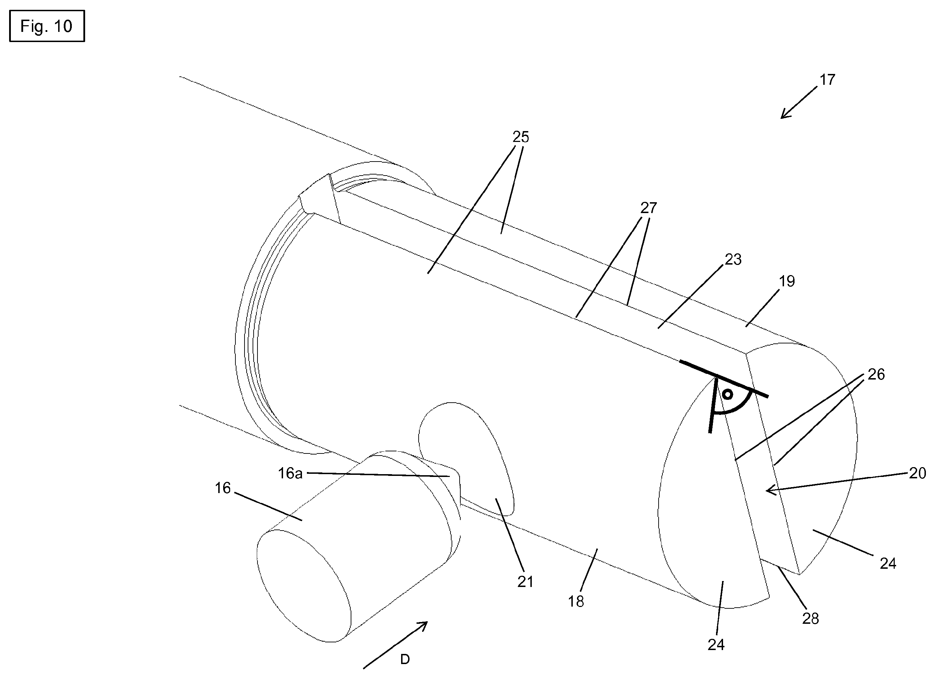

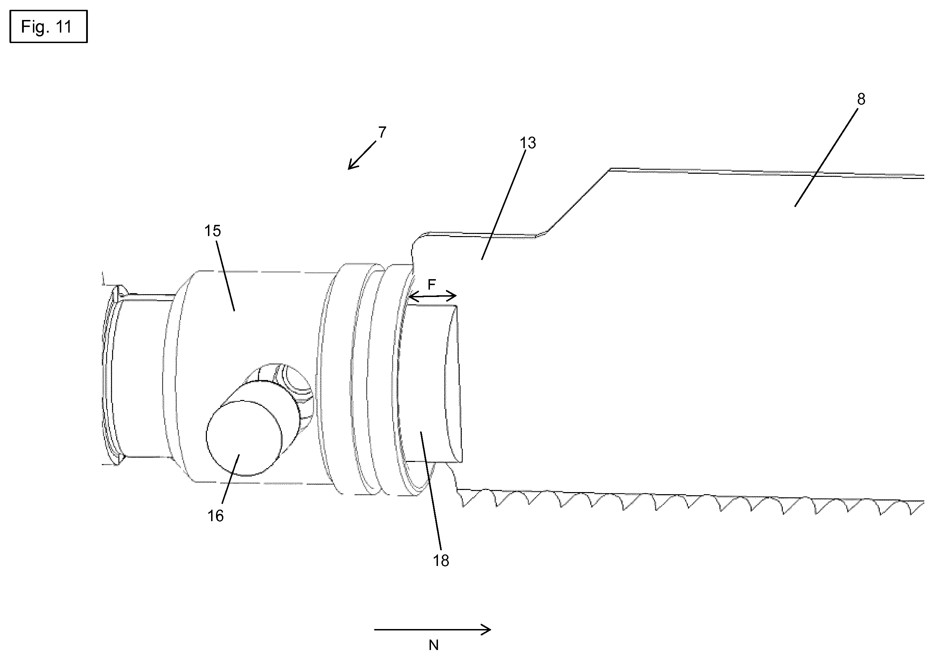

Sowohl die erste als auch die zweite Haltebacke 18, 19 enthält jeweils eine Führungsfläche 23, eine Frontfläche 24, eine Mantelfläche 25, eine Frontkante 26, eine erste Seitenkante 27 und eine zweite Seitenkante 28 (vgl. Fig. 7 bis 10). Zwischen der Führungsfläche 23 und der Frontfläche 24 ist die Frontkante 26 positioniert. Gemäß einer ersten Ausführungsform sind die Führungsfläche 23 sowie die Frontfläche 24 der jeweils ersten und zweiten Haltebacke 18, 19 im Wesentlichen in einem rechten Winkel zueinander angeordnet (vgl. Fig. 9). Die erste und zweite Seitenkante 27, 28 der Mantelfläche 25 verläuft jeweils senkrecht zu der Frontfläche 24. Wie in Fig. 10 gezeigt, ist der Sicherungsstift 16 im Wesentlichen zylindrisch ausgestaltet mit einer kegelförmigen Spitze 16a an einem Ende. Mit der kegelförmigen Spitze 16a wird der Sicherungsstift 16 durch die erste Durchbohrung 21 und in die zweite Durchbohrung 22 eingeführt. Wie in Fig. 11 zu erkennen ist, dient der Sicherungsstift 16 als Sicherung des Sägeblatts 3 in der Halteeinrichtung 17 und zwischen den Haltebacken 18, 19. Mit Hilfe eines Haltemechanismus kann der Sicherungsstift 16 reversible in Pfeilrichtung D in die erste Durchbohrung 21 bzw. zweite Durchbohrung 22 eingeführt, gehalten und entgegen der Pfeilrichtung D wieder herausgeholt werden. Wenn sich der Sicherungsstift 16 in den Haltebacken 18, 19 befindet, ist der zylindrische Anteil des Sicherungsstifts 16 in der ersten Durchbohrung 21 positioniert und die kegelförmige Spitze 16a ragt in die zweite Durchbohrung 22 hinein. Der Haltemechanismus zum Einführen und Halten des Sicherungsstifts 16 entspricht im Wesentlichen dem Stand der Technik und ist in den Figuren nicht gezeigt.

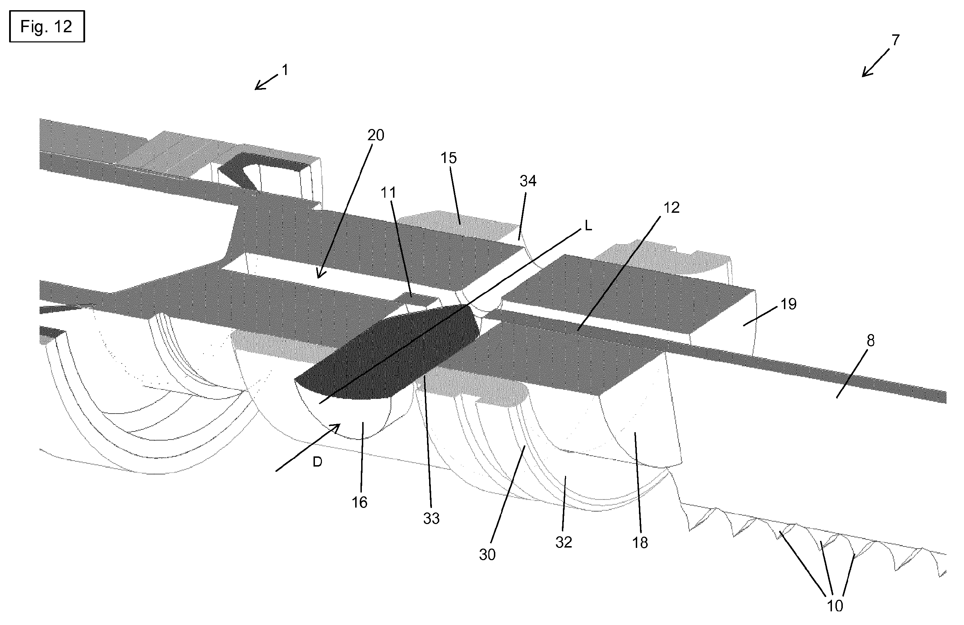

Die Überwurfhülse 15 ist im Wesentlichen ein zylindrisches Rohr mit einem ersten Ende 15a und einem zweiten Ende 15b. Mit dem ersten Ende 15a ist die Überwurfhülse 15 an der Säbelsäge 1 befestigt (vgl. Fig. 4). An dem zweiten Ende 15b ist eine Auskragung 29 in Form eines Rings 30 mit einer umlaufenden Nut 31 vorgesehen. Die Auskragung 29 enthält an einer Innenseite einen abgeschrägten, nach innen verlaufenden Rand 32. Der Rand 32 verläuft in einem Winkel α zum Radius M. Des Weiteren enthält die Überwurfhülse 15 eine erste Durchbohrung 33 und eine zweite Durchbohrung 34 in der Mantelfläche 35 des zylindrischen Rohrs. Die erste und zweite Durchbohrungen 33, 34 der Überwurfhülse 15 sind ungefähr gleich groß und liegen sich gegenüber. Wie in Fig. 11 und 12 gezeigt, liegen in einem zusammengebauten Zustand der Führungsvorrichtung 7 die Durchbohrungen 21, 22 der Haltebacken 18, 19 und die Durchbohrungen 33, 34 der Überwurfhülse 15 gleich auf bzw. auf einer Linie L, sodass der Sicherungsstift 16 durch die erste Durchbohrung 34 der Überwurfhülse 15 in die erste Durchbohrung 21 der ersten Haltebacke 18 durch die Durchbohrung 14 des Sägeblatts 3 und mit der kegelförmigen Spitze 16a in die zweite Durchbohrung 22 der zweiten Haltebacke 19 geführt werden kann.

Die erste und zweite Haltebacke 18, 19 sowie die Überwurfhülse 15 stehen in einem gewissen Längenverhältnis zueinander. In Fig. 11 ist der zusammengebaute Zustand der Führungsvorrichtung 7 gezeigt. Das Ende der ersten und zweiten Haltebacke 18, 19 bzw. die Frontkante 26 der ersten und zweiten Haltebacke 18, 19 ragt dabei um eine Wegstrecke F aus der Überwurfhülse 15 in Pfeilrichtung N heraus. Wie in Fig. 11 zu erkennen ist, grenzt der Ring 30 der Überwurfhülse 15 an den dritten Bereich 13 des Aufnahmeendes 9 des Sägeblatts 3 an. Die erste und zweite Haltebacke 18, 19 fasst hingegen deutlich in den dritten Bereich 13 hinein. Die Wegstrecke F, die die erste und zweite Haltebacke 18, 19 in den dritten Bereich 13 bzw. generell in das Sägeblatt 3 hineinragt, beträgt dabei wenigstens 2 bis 7 mm. Es ist jedoch auch möglich, dass die Wegstrecke F einen größeren Betrag als 7 mm aufweist.

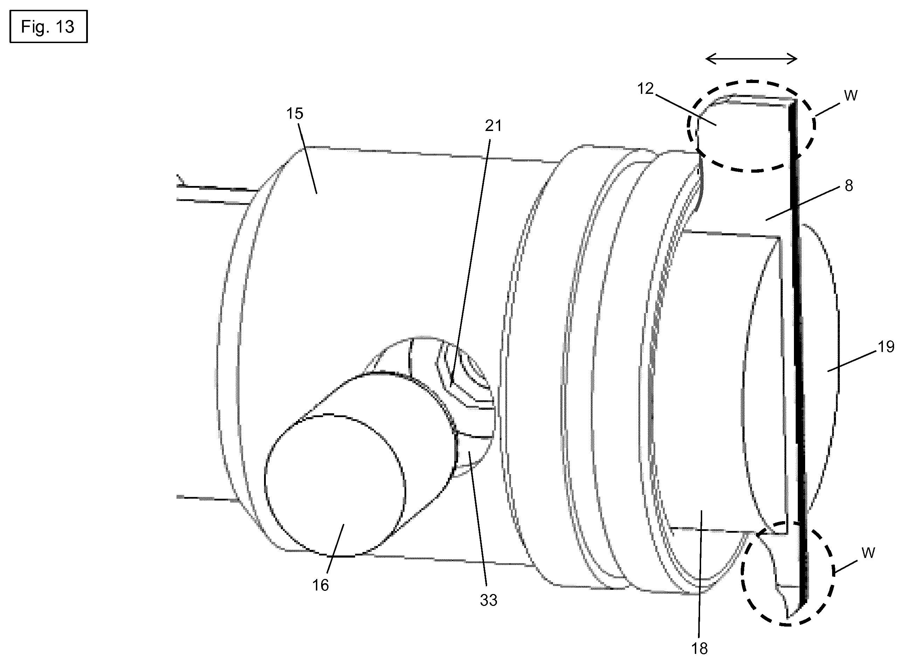

Wenn nun wie in Fig. 13 dargestellt das Sägeblatt 3 durch eine mechanische Einwirkung abgebrochen ist, bleibt ein Rest des Sägeblatts von den beiden Haltebacken 18, 19 gehalten in der Führungseinrichtung 7 zurück. Aufgrund der speziellen Form der Haltebacken 18, 19 und insbesondere dadurch, dass die Frontkante 26 der jeweils ersten und zweiten Haltebacke 18, 19 in einem im Wesentlichen rechten Winkel direkt mit der ersten und zweiten Seitenkante 27, 28 der jeweils ersten und zweiten Haltebacke 18, 19 verbunden ist, entsteht eine besonders günstige Bruchkante Z an dem Rest des Sägeblatts 3. Wegen der besonders vorteilhaften Bruchkante Z ist der Rest W des Sägeblatts 3, der in der Führungseinrichtung 7 noch eingeklemmt ist, ausreichend groß, um einfach und schnell von einem Anwender der Säbelsäge 1 aus der Führungseinrichtung 7 durch ein Erfassen der Bereichs W entnommen zu werden.

Je weiter die Frontkante 26 der jeweils ersten und zweiten Haltebacke 18, 19 in den dritten Bereich 13 des Aufnahmeendes 9 des Sägeblatts 3 hineinragt, desto weiter ist eine Bruchkante Z eines abgebrochenen Sägeblatts 3 von dem Ring 30 der Überwurfhülse 15 entfernt. Hierdurch vergrößert sich der Rest W des Sägeblatts 3, der nach einem Sägeblattbruch in der Führungseinrichtung 7 noch eingeklemmt ist.

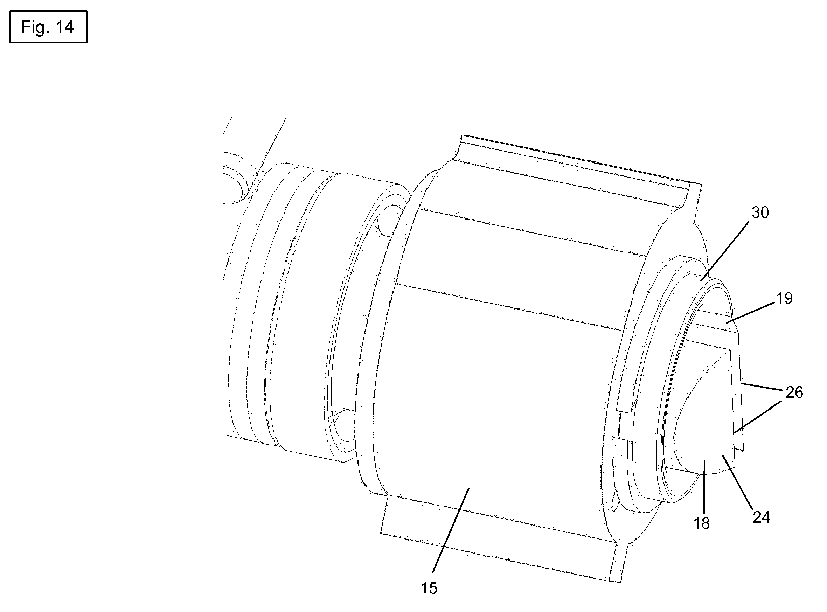

Gemäß einer weiteren Ausführungsform der erfindungsgemäßen Führungseinrichtung 7 sind die Führungsfläche 23 sowie die Frontfläche 24 der jeweils ersten und zweiten Haltebacke 18, 19 im Wesentlichen nicht in einem rechten Winkel zueinander angeordnet (vgl. Fig. 14). Die Führungsfläche 23 sowie die Frontfläche 24 der jeweils ersten und zweiten Haltebacke 18, 19 sind in einem stumpfen Winkel (kleiner als 90°) zueinander positioniert.

## Patentansprüche

1. Führungsvorrichtung (7), insbesondere für eine Säbelsäge, zum Aufnehmen und lösbaren Halten eines Werkzeugs (3), vorzugsweise eines Sägeblatts, enthaltend eine Halteeinrichtung (17) mit wenigstens einer ersten und zweiten Haltebacke (18, 19) für ein Aufnahmeende (9) des Werkzeugs (3), wobei sowohl die erste als auch die zweite Haltebacke (18, 19) jeweils eine Frontkante (26), eine erste Seitenkante (27) sowie eine zweite Seitenkante (28) enthält,
**dadurch gekennzeichnet, dass** die Frontkante (26) der jeweils ersten und zweiten Haltebacke (18, 19) in einem im Wesentlichen rechten Winkel direkt mit der ersten und zweiten Seitenkante (27, 28) der jeweils ersten und zweiten Haltebacke (18, 19) verbunden ist.

2. Führungsvorrichtung (7) nach Anspruch 1,
**dadurch gekennzeichnet, dass** sich in einem zusammengebauten Zustand der Führungsvorrichtung (7) die Frontkante (26) der jeweils ersten und zweiten Haltebacke (18, 19) um eine Wegstrecke (F) aus der Überwurfhülse (15) in Pfeilrichtung (N) erstrecken.

3. Führungsvorrichtung (7) nach Anspruch 2,
**dadurch gekennzeichnet, dass** die Wegstrecke (F) einen Betrag von wenigstens 2 bis 7 mm aufweist.
